# EUROPÄISCHE PATENTSCHRIFT

(11) **EP 2 280 821 B1**
(45) Veröffentlichungstag und Bekanntmachung des Hinweises auf die Patenterteilung: **02.11.2011**
(21) Anmeldenummer: 09745619.8
(22) Anmeldetag: 24.03.2009
(51) Int. Cl.: B29C 70/86, B29C 70/08, B29C 70/22, B29C 70/24

(54) **AUSSCHNITTSVERSTÄRKUNG FÜR KERNVERBUNDE UND VERFAHREN ZU DEREN HERSTELLUNG**
SECTION REINFORCEMENT FOR SANDWICH STRUCTURES AND METHOD FOR ITS MANUFACTURE
RENFORCEMENT DES DÉCOUPES POUR DES STRUCTURES SANDWICH ET PROCÉDÉ POUR SA FABRICATION

(30) Priorität: 16.05.2008 DE 102008001826; 16.05.2008 US 127850 P
(43) Veröffentlichungstag der Anmeldung: 09.02.2011
(73) Patentinhaber: Airbus Operations GmbH, 21129 Hamburg (DE)
(72) Erfinder: ENDRES, Gregor Christian, 85276 Pfaffenhofen (DE); WEBER, Hans-Jürgen, 27283 Verden (DE)
(74) Vertreter: Peckmann, Ralf
(86) Internationale Anmeldenummer: PCT/EP2009/053414
(87) Internationale Veröffentlichungsnummer: WO 2009/138286

(56) Entgegenhaltungen:
- DE-A1- 2 853 464
- DE-A1-102004 017 311
- DE-A1-102004 025 381
- US-B1- 6 355 339

## Beschreibung

Die vorliegende Erfindung betrifft eine Ausschnittverstärkung für Kernverbunde.

Aufgrund ihres besonders guten Verhältnisses von Steifigkeit bzw. Festigkeit zu Dichte finden Kernverbunde insbesondere im Bereich des Flugzeugbaus einen breiten Anwendungsbereich.

Kernverbunde werden im Allgemeinen aus einer oberen und einer unteren Deckschicht bzw. Decklage gebildet, zwischen denen sich zur Erhöhung der Steifigkeit beispielsweise eine aus vertikal verlaufenden Zellen mit hexagonalen Querschnitt gebildete, honigwabenartige Kernstruktur befindet.

Eine kommerziell erhältliche Alternative zu Honigwabenstrukturen stellen Hartschaumstoffe dar. Sie weisen unter anderem im Bereich thermischer und akustischer Isolation, sowie bei der Prozesstechnik zur Herstellung von Kernverbunden Vorteile gegenüber Wabenstrukturen auf. Ein Nachteil dieser Schaumstrukturen liegt in den, im Vergleich zu den Waben vergleichbarer Dichte, geringeren mechanischen Festigkeitswerten. Um diese schlechteren mechanischen Festigkeitswerte zu kompensieren sind in der Literatur unter anderem unterschiedliche nähtechnische Ansätze zu finden, die zum Teil auch kommerziell erhältliche Produkte beschreiben. Die Nähtechnik bietet die Möglichkeit, Fasern und Fäden unter unterschiedlichen Winkeln und über ein Bauteil variierender Dichte Einzubringen. Durch die technisch möglichen Stichgeschwindigkeiten ist eine zügige Vernähung des Bauteils möglich. Nach einem Harzinfiltrationsprozess tragen die durchstochenen Bereiche erheblich zur mechanischen Verstärkung des Grundschaumstoffes bei. Die Vorteile liegen dabei in der Prozessgeschwindigkeit und der Möglichkeit, die Kernstruktur mechanisch auf den Anwendungsfall anzupassen. Anwendung finden diese Strukturen bereits in Kernverbundkonstruktionen im LKW- und Schiffsbau.

Die dabei eingesetzten Nähverfahren weisen eine Gemeinsamkeit auf: die Nadel durchsticht den Schaumstoff und bringt dabei gleichzeitig den Faden oder die Fasern ein. Die Unterschiede der einzelnen Verfahren liegen in der Fixierung des Fadens. Beim Tuften wird an der Unterseite eine Schlaufe gebildet, die beispielsweise in einem Silikonkautschuk fixiert wird. Alternativ wird in anderen Verfahren mit einem Unterfaden gearbeitet oder wie beim Blindstich ein Einseitkettenstich eingesetzt.

Der große Nachteil dieser Verfahren liegt darin, dass nach dem Rückzug der Nadel das verbleibende Loch im Verhältnis zu der eingebrachten Fasermenge teilweise erheblich zu groß ist (d. h. der Nadeldurchmesser bestimmt immer die Lochgröße). Nach der Infiltration ist der Hohlraum mit Harz gefüllt. Die Verbesserung der mechanischen Eigenschaften beruht daher in der Hauptsache auf dem eingebrachten Harz. Die entstandene Kernstruktur weist hierdurch ein erheblich vergrößertes Gewicht auf.

Für den Einsatz im Flugzeugbau ist der Gewichtszuwachs im Verhältnis zur Verbesserung der mechanischen Eigenschaften zu groß. Ein Einsatz von Kernverbundkonstruktionen mit derartigen Kernstrukturen kommt daher nicht in Frage.

Aus der DE 10 2005 024 408 A1 ist ein Verfahren zur Verstärkung von Schaumwerkstoffen mit Fasern oder Faserbündeln bekannt, das die Herstellung von einem Verbundwerkstoff ermöglicht, bei dem im Wesentlichen die eingebrachten Fasern für die Verbesserung der mechanischen Eigenschaften des Schaumstoffkerns verantwortlich sind. Beschrieben wird sowohl das Verfahren zur Verstärkung der Schaumwerkstoffe als auch ein verstärkter Kernverbund. Bei dem Verfahren wird ein Schaumwerkstoff mit Faserbündeln versehen, die mit einer Nadel in den Schaumwerkstoff eingebracht werden. Dabei wird mit der Nadel zunächst von einer Seite aus ein Durchgangsloch in den Schaumwerkstoff gestochen, um dann ein auf der anderen Seite befindliches Faserbündel mit der Nadel aufzugreifen und in den Schaumwerkstoff einziehen zu können.

Aus der DE 10 2004 017 311 A1 ist ein Verfahren zum Herstellen von Faserverbund-Halbzeugen mittels Rundflechttechnik bekannt, wobei ein Flechtkern mit Flechtfäden beflochten wird. DE 102004025301 offenbart ein Verfahren zur Herstellung einer faserverstarkten Ausschnittverstärkung.

Bei Bauteilen, die in Flugzeugen zum Einsatz kommen, gibt es zahlreiche Bereiche in denen Aussparungen in einen Kernverbund eingebracht werden müssen. Die entstehenden Schnittkanten müssen anschließend wieder versiegelt werden und es muss garantiert werden, dass keine Instabilität am Rande des Kernverbundes entsteht. Dies gilt ausnahmslos für alle Kernverbunde. Gerade bei hoch belasteten Ausschnitten, wie z.B. Fensterausschnitten kann das zu Schwierigkeiten führen.

Es ist daher Aufgabe der vorliegenden Erfindung ein Verfahren zur Verfügung zu stellen, bei dem bereits bei der Bauteilherstellung eine Ausspaarung vorgesehen werden kann, so dass sehr stabile Ausschnitte bei einem geringen Bauteilgewicht entstehen.

Erfindungsgemäß wird diese Aufgabe jeweils durch die Merkmale der unabhängigen Ansprüche gelöst. In den Unteransprüchen finden sich vorteilhafte Ausgestaltungen und Verbesserungen der Erfindung.

Bei einem erfindungsgemäßen Verfahren zum Herstellen von einer Ausschnittverstärkung für einen Kernverbund mittels Rundflechttechnik wird ein ringförmiger Flechtkern mit Fasersträngen umflochten und vor oder nach dem Umflechten werden Durchgangslöcher in dem Flechtkern erzeugt und ein oder mehrere Faserbündel in die Durchgangslöcher in dem Flechtkern mittels einer Nadel eingezogen.

Bevorzugt ist das Faserbündel beim Ein Einziehen wenigstens zeitweise in die Nadel eingehakt. Ein Einhaken des Faserbündels in die Nadel bietet den Vorteil, dass ein Einfädeln zum Verbinden der Nadel mit dem Faserbündel nicht erforderlich ist. Dadurch kann das Faserbündel schneller und einfacher an der Nadel befestigt werden. Ferner ist die Verbindung durch ein Einhaken leichter automatisierbar. Auf diese Weise ist es möglich, auch vorteilhaft mehrere einzelne Faserbündel zu verwenden.

Gemäß einer bevorzugten Ausführungsform der Erfindung wird beim Einziehen des Faserbündels die Nadel außerhalb eines Hakens in axialer Richtung im Wesentlichen auf Zug beansprucht. Das Faserbündel wird somit nicht von der Nadel in den Flechtkern geschoben sondern mittels des Hakens gezogen. Dadurch ist es nicht erforderlich, das Faserbündel beim Einziehen im Bereich eines Durchgangslochs zusätzlich zu der Nadel in das Durchgangsloch zu quetschen, was sonst zu einer ungewünschten Aufweitung des Durchgangslochs führt. Bevorzugt findet sich lediglich im Bereich des Hakens zusätzlich ein Faserbündel in dem Durchgangsloch.

Bei einer weiteren bevorzugten Ausführungsform wird ein Flechtkern aus Schaumstoff umflochten. Schaumstoff weist unter anderem im Bereich thermischer und akustischer Isolation, sowie bei der Prozesstechnik zur Herstellung von Kernverbunden Vorteile gegenüber den verbreiteten Wabenstrukturen auf.

Gemäß einer bevorzugten Ausführungsform wird vor dem Umflechten wenigstens eine Decklage, die eine höhere Steifigkeit als der Flechtkern aufweist, auf den Flechtkern aufgebracht. Die Decklage ermöglicht eine Erhöhung der äußeren Festigkeit der Ausschnittverstärkung für einen Kernverbund.

Bei einer weiteren Ausführungsform wird der Flechtkern mehrmals nacheinander umflochten. Dabei werden bevorzugt jeweils nicht wellige Verstärkungsfaser-Einzellagen auf dem Flechtkern abgelegt. Dies hat den Vorteil, dass die Berechenbarkeit der erfindungsgemäß hergestellten Ausschnittverstärkung verbessert ist, da mathematische Berechnungsansätze für unidirektionale Gewebe anwendbar sind.

Gemäß einer weiteren Ausführungsform wird mit der Nadel auch das Durchgangsloch erzeugt. Mit der Nadel als Werkzeug wird demnach sowohl das Durchgangsloch erzeugt als auch das Faserbündel in den Flechtkern eingezogen. Dies hat den Vorteil, dass für beide Vorgänge nur ein Werkzeug benötigt wird. Hierdurch kann Zeit eingespart werden, da ein Werkzeugwechsel zwischen den Vorgängen entfällt. Ferner ist dies besonders kostengünstig, da maschinenseitig nur ein Werkzeug mit der dazugehörigen Mechanik und Steuerung erforderlich ist.

Bei einer weiteren bevorzugten Ausführungsform wird kurz vor oder während des Umflechtens auf den Flechtkern oder den Faserstrang ein Klebemittel aufgetragen, dass während des Umflechtens noch nicht ausgehärtet ist. Durch das Klebemittel werden die Faserstränge mit dem Flechtkern und den Faserbündeln verklebt. Die Festigkeit der Umflechtung wird dadurch erhöht. Ferner ergibt sich eine verbesserte Haltbarkeit der Umflechtung in den Fällen, dass Teile der Umflechtung z.B. durch mechanische oder thermische Einwirkungen beschädigt werden.

Gemäß einer weiteren bevorzugten Ausführungsform erfolgt nach dem Einziehen der Faserbündel in die Durchgangslöcher ein Infiltrieren der Durchgangslöcher und/oder des Flechtkerns mit einem aushärtbaren Kunststoff. Hierdurch wird der Verbund zwischen den einzelnen Fasern und dem Flechtkern, der bevorzugt aus Schaumstoff besteht, verbessert. Für diesen Vorgang kann jedes bekannte Infiltrationsverfahren eingesetzt werden. Gemäß einer weiteren bevorzugten Ausführungsform verbinden sich in einem Verfahrensschritt die Faserstränge und die Faserbündel miteinander, indem sie chemisch miteinander reagieren. Dies betrifft die Stellen an denen die Faserstränge und die Faserbündel übereinander verlaufen, sich also kreuzen. Das Verbinden bzw. Verkleben der Faserstränge mit den Faserbündeln an den Kreuzungsstellen erhöht die Festigkeit des Gesamtverbundes aus Flechtkern und den Fasern weiter. Aktiviert wird das Verbinden besonders bevorzugt mechanisch durch Andruckkraft zwischen Fasern, bevorzugt durch Wärmeeinwirkung oder durch Bestrahlung mit Licht. Es ist natürlich hierfür auch jedes andere Verfahren zur Aktivierung einer solchen Klebeverbindung einsetzbar. Die Faserstränge und die Faserbündel können das gleiche Klebemittel aufweisen. Es bevorzugt, dass die Faserstränge und die Faserbündel unterschiedliche Komponenten eines Mehrkomponentenklebemittels aufweisen, die dann miteinander reagieren und die Verklebung auslösen. Bevorzugt wird eine dritte zusätzliche chemische Substanz zugeführt die den Verklebungsvorgang auslöst.

Eine erfindungsgemäße Ausschnittverstärkung für einen Kernverbund, weist einen ringförmigen Flechtkern, eine Umflechtung des Flechtkerns sowie mindestens ein Durchgangsloch durch den ringförmigen Flechtkern und mindestens ein in dem Durchgangsloch angeordnetes Faserbündel auf, wobei das Durchgangsloch eine Querschnittsfläche aufweist, die von dem mindestens einen Faserbündel im Wesentlichen voll ausgefüllt wird und die Umflechtung auch in einem inneren Bereich des ringförmigen Flechtkerns verläuft.

Es werden erfindungsgemäß zwei Techniken miteinander kombiniert, um einen Flechtkern, der bevorzugt aus Schaumstoff besteht, in seinen Festigkeitseigenschaften zu verbessern, dass die erfindungsgemäße Ausschnittverstärkung für einen Kernverbund gebildet wird. Es werden hierzu eine Umflechtung mit durch den Flechtkern durchgezogenen Faserbündeln, entsprechend einer Durchnähung kombiniert. Die erfindungsgemäße Ausschnittverstärkung für einen Kernverbund weist dadurch besonders hochwertige Festigkeitseigenschaften bei nur geringem Gewicht des Bauteils auf.

Gemäß einer bevorzugten Ausführungsform weist das mindestens eine Faserbündel wenigstens eine Schlaufe auf. Die Schlaufe ermöglicht es, das Faserbündel mittels eines Hakens in die Durchgangslöcher in dem Flechtkern einzuziehen.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: eine schematische Querschnittsansicht einer erfindungsgemäßen Ausschnittsverstärkung für einen Kernverbund gemäß einer bevorzugten Ausführungsform der Erfindung;
- Fig. 2: eine schematische Querschnittsansicht eines Stadiums des Verfahrens, bei dem die Nadel den Flechtkern durchdrungen hat und beim Zurückziehen Faserbündeln in den Flechtkern einziehen wird;
- Fig. 3: eine schematische Querschnittsansicht eines Flechtkerns beim Verfahrensschritt Umflechten;
- Fig. 4: einen Ausschnitt aus einem Flechtkern, der mit Decklagen versehen ist, als Querschnittsansicht.

In den Figuren bezeichnen dieselben Bezugszeichen gleiche oder funktionsgleiche Komponenten, soweit nichts Gegenteiliges angegeben ist.

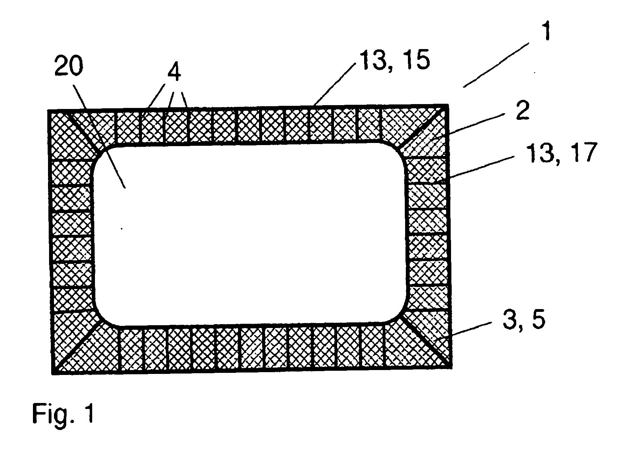

Fig. 1 zeigt eine schematische Querschnittsansicht einer erfindungsgemäßen Ausschnittsverstärkung für einen Kernverbund 1 gemäß einer bevorzugten Ausführungsform der Erfindung. Ein Flechtkern 1, der bei dieser bevorzugten Ausführungsform ringförmig aus Schaumstoff ausgebildet ist, ist von einer Umflechtung 5 mit Fasersträngen 3 umgeben. Ferner weist der Flechtkern 2 Durchgangslöcher 4 (in Fig. 1 sind einige davon beispielhaft mit dem Bezugszeichen 4 versehen) auf, die durch den Flechtkern 2 verlaufen. In die Durchgangslöcher 4 sind Faserbündel 13 eingezogen. Der Flechtkern 2 weist einen inneren freien Bereich 20 auf.

Zunächst wird hierzu der Flechtkern 2 aus Schaumstoff gebildet. Bei dieser beispielhaften Ausführungsform weist dieser außen im Wesentlichen eine rechteckige Querschnittsform auf und im inneren Bereich 20 eine stärker gerundete rechteckige Querschnittsform auf. Je nach Anwendung können Flechtkerne 2 mit den verschiedensten Geometrien z.B. auch runde, mehreckige, Flechtkerne ohne den inneren Bereich 20, ausgebildet werden. Der Flechtkern wird dann im Rahmen der vorliegenden bevorzugten Ausführungsform mit Durchgangslöchern 4 durch Durchstoßen versehen. Die Durchgangslöcher können jedoch auch mit anderen Verfahren wie, z.B. Bohren, Wasserstrahlbearbeitung, Laserbearbeitung hergestellt werden. Anschließend werden Faserbündel 13 durch die Durchgangslöcher 4 gezogen. Dabei können verschiedenste Nähverfahren zum Einsatz kommen. Die Faserbündel verlaufen bei dieser bevorzugten Ausführungsform außen und im inneren Bereich 20 des Flechtkerns 2. Die Faserbündel 13 können dabei vor oder nach dem Einziehen in den Flechtkern 2 mit einem Klebemittel 15 versehen werden, so dass sie nach dem Aushärten den Klebemittels 15 besonders fest mit dem Flechtkern 2 verbunden sind, was einen besonders stabilen Verbund der erfindungsgemäßen Ausschnittverstärkung für einen Kernverbund ergibt. Nachfolgend erfolgt eine Umflechtung 5 des Flechtkerns 2 durch Faserstränge 3. Hierzu werden bevorzugt Rundflechtmaschinen eingesetzt. Der Flechtkern 2, der so mit den Faserbündeln 13 und Fasersträngen 3 versehen ist, wird gemäß der bevorzugten Ausführungsform anschließend noch mit einem aushärtbaren Kunststoff 17 versehen. Dieser aushärtbare Kunststoff 17 dringt bevorzugt in die Durchgangslöcher 4 mit den eingezogenen Faserbündeln 13 ein und trägt nach dem Aushärten zu einer Fixierung der erfindungsgemäßen Ausschnittverstärkung für einen Kernverbund 1 bei.

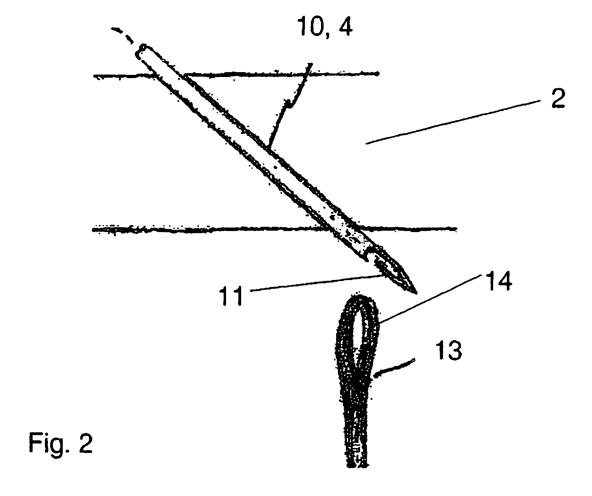

Fig. 2 zeigt eine schematische Querschnittsansicht eines Stadiums des Verfahrens, bei dem die Nadel 10 den Flechtkern 2 durchdrungen hat. Unterhalb der Nadel 10 ist ein Faserbündel 13 dargestellt. Die Nadel 10 weist bei dieser Ausführungsform einen Haken 11 auf. Das Faserbündel 13 weist eine Schlaufe 14 auf.

Nach dem Durchstechen des Flechtkerns 2 wird die Schlaufe 14 des Faserbündels 13 in den Haken 11 der Nadel 10 eingehakt. Beim Zurückziehen der Nadel 10 wird das Faserbündel 13 in das Durchgangsloch 4 in dem Flechtkern 2 eingezogen. Die Nadel 10 wird bei dieser bevorzugten Ausführungsform durch Verhaken mit dem Faserbündel 13 verbunden. Andere Verbindungstechniken zwischen der Nadel 10 und dem Faserbündel 13 wie z.B. Anhaften, Klemmen und dergleichen sind ebenfalls möglich.

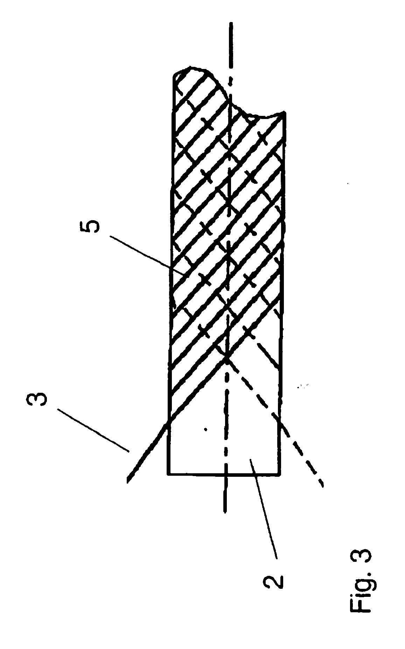

Fig. 3 zeigt eine schematische Querschnittsansicht eines Flechtkerns 2 beim Verfahrensschritt Umflechten. Die Umflechtung 5 ist netzartig auf dem Flechtkern 2 erkennbar. Der Flechtkern 2 wird in der Figur von rechts nach links mit Fasersträngen 3 umflochten.

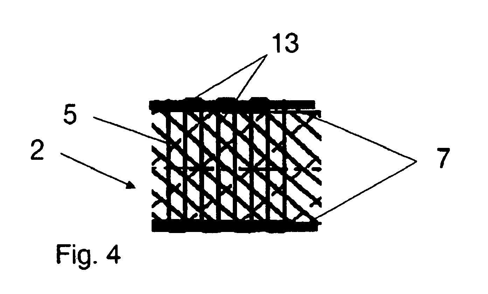

Fig. 4 zeigt einen Ausschnitt aus einem Flechtkern, der mit Decklagen 7 versehen ist, als Querschnittsansicht. Die Decklagen 7 sind hierbei mit dem Flechtkern 2 mittels der Faserbündel 13 vernäht.

Die Decklagen 7 bilden eine Verstärkung des Flechtkerns 2, der bei dieser Ausführungsform aus Schaumstoff besteht und daher eine geringe Oberflächensteifigkeit aufweist. Bevorzugt besteht die Verstärkung 7 aus festen Kunststoffmaterialien.

Obwohl die vorliegende Erfindung anhand bevorzugter Ausführungsbeispiele vorliegend beschrieben wurde, ist sie darauf nicht beschränkt, sondern auf vielfältige Weise modifizierbar.

Es werden zum Bilden einer erfindungsgemäßen Ausschnittverstärkung für einen Kernverbund erfindungsgemäß zwei Techniken miteinander kombiniert, um einen Flechtkern, der bevorzugt aus Schaumstoff besteht, in seinen Festigkeitseigenschaften zu verbessern. Kombiniert werden hierzu eine Umflechtung mit durch Löcher im Flechtkern durchgezogene Faserbündel. Die erfindungsgemäße Ausschnittverstärkung für einen Kernverbund weist dadurch besonders hochwertige Festigkeitseigenschaften bei nur geringem Gewicht des Bauteils auf.

Das erfindungsgemäße Verfahren ermöglicht es, dass bereits bei der Bauteilherstellung eine Auspaarung vorgesehen werden kann, so dass sehr stabile Ausschnitte entstehen. Ausgangsstoff ist ein Schaumstoffring, der nach dem oben beschriebenen Verfahren mit Faserbündeln verstärkt wurde. Jedoch kann das Verfahren auch auf reine Schaumstoffteile ohne Verstärkung angewendet werden. Die Innenkontur weist die Abmaße des späteren Ausschnitts auf. Dieser geschlossene Ring wird in eine Rundflechtmaschine eingelegt und unkontinuierlich umflochten, so dass eine geschlossene Faserummantelung entsteht. Der so mit Fasern ummantelte Vorformling wird vor der Applikation der Decklagen in die Kernstruktur mit eingelegt und dann zusammen mit dem Bauteil infiltriert. Alternativ dazu kann auch ein vorinfiltriertes Bauteil erzeugt werden. Um ein Auffüllen in der Ringmitte zu verhindern, kann dafür ein Platzhalter eingebracht werden, der nach der Infiltration wieder entfernt wird. Abgesehen von der eventuell erforderlichen Nacharbeit ist der Ausschnitt nach der Infiltration einsatzbereit. Die Faserorientierung kann an den Belastungsfall angepasst werden. Eine Möglichkeit zusätzlich Stehfäden zu integrieren besteht.

### Bezugszeichenliste

- 1: Ausschnittverstärkung für einen Kernverbund
- 2: Flechtkern
- 3: Faserstrang (flechten)
- 4: Durchgangslöcher
- 5: Umflechtung
- 7: Decklage
- 10: Nadel
- 11: Haken
- 13: Faserbündel
- 14: Schlaufe
- 15: Klebemittel
- 17: aushärtbarer Kunststoff
- 20: innerer Bereich des Flechtkerns

## Patentansprüche

1. Verfahren zum Herstellen einer Ausschnittverstärkung für einen Kernverbund mittels Rundflechttechnik, wobei ein ringförmiger Flechtkern (2) mit Fasersträngen (3) umflochten wird und vor oder nach dem Umflechten Durchgangslöcher (4) in dem Flechtkern (2) erzeugt und ein oder mehrere Faserbündel (13) in die Durchgangslöcher (4) in dem Flechtkern (2) mittels einer Nadel (10) eingezogen werden.

2. Verfahren nach Anspruch 1,
**dadurch gekennzeichnet,**
**dass** das Faserbündel (13) beim Einziehen wenigstens zeitweise in die Nadel (10) eingehakt wird.

3. Verfahren nach Anspruch 1 oder 2,
**dadurch gekennzeichnet,**
**dass** beim Einziehen des Faserbündels (13) die Nadel (10) außerhalb eines Hakens (11) in axialer Richtung im Wesentlichen auf Zug beansprucht wird.

4. Verfahren nach wenigstens einem der vorhergehenden Ansprüche,
**dadurch gekennzeichnet,**
**dass** ein Flechtkern (2) aus Schaumstoff umflochten wird.

5. Verfahren nach wenigstens einem der vorhergehenden Ansprüche,
**dadurch gekennzeichnet,**
**dass** vor dem Umflechten wenigstens eine Decklage (7), die eine höhere Steifigkeit als der Flechtkern (2) aufweist, auf den Flechtkern (2) aufgebracht wird.

6. Verfahren nach wenigstens einem der vorhergehenden Ansprüche,
**dadurch gekennzeichnet,**
**dass** der Flechtkern (2) mehrmals nacheinander umflochten wird.

7. Verfahren nach wenigstens einem der vorhergehenden Ansprüche,
**dadurch gekennzeichnet,**
**dass** mit der Nadel (10) auch das Durchgangsloch (4) erzeugt wird.

8. Verfahren nach wenigstens einem der vorhergehenden Ansprüche,
**dadurch gekennzeichnet,**
**dass** kurz vor oder während des Umflechtens auf den Flechtkern (2) oder den Faserstrang (3) ein Klebemittel (15) aufgetragen wird, dass während des Umflechtens noch nicht ausgehärtet ist.

9. Verfahren nach wenigstens einem der vorhergehenden Ansprüche,
**dadurch gekennzeichnet,**
**dass** nach dem Einziehen der Faserbündel (13) in die Durchgangslöcher (4) ein Infiltrieren der Durchgangslöcher (4) und/oder des Flechtkerns (2) mit einem aushärtbaren Kunststoff (17) durchgeführt wird.

10. Verfahren nach wenigstens einem der vorhergehenden Ansprüche,
**dadurch gekennzeichnet,**
**dass** sich die Faserstränge (3) und die Faserbündel (13) miteinander verbinden, indem sie chemisch miteinander reagieren.

11. Verfahren nach wenigstens einem der vorhergehenden Ansprüche,
**dadurch gekennzeichnet,**
**dass** der innere Bereich (20) des Flechtkerns (2) vor dem Infiltrieren abgedeckt wird.

12. Ausschnittverstärkung für einen Kernverbund (1), die einen ringförmigen Flechtkern (2), eine Umflechtung (5) des Flechtkerns (2) sowie mindestens ein Durchgangsloch (4) durch den ringförmigen Flechtkern (2) und mindestens ein in dem Durchgangsloch (4) angeordnetes Faserbündel (13) aufweist, wobei das Durchgangsloch (4) eine Querschnittsfläche aufweist, die von dem mindestens einen Faserbündel (13) im Wesentlichen voll ausgefüllt wird und wobei die Umflechtung (5) auch in einem inneren Bereich (20) des ringförmigen Flechtkerns (2) verläuft.

13. Ausschnittverstärkung nach Anspruch 12,
**dadurch gekennzeichnet,**
**dass** das mindestens eine Faserbündel (13) wenigstens eine Schlaufe (14) aufweist.

14. Ausschnittverstärkung nach Anspruch 12 oder 13,
**dadurch gekennzeichnet,**
**dass** die Faserstränge (3) Kohle-, Glas-, Aramid-, und/oder Kevlarfasern aufweisen.

15. Ausschnittverstärkung nach wenigstens einem der Ansprüche 12 bis 14,
**dadurch gekennzeichnet,**
**dass** auf dem Flechtkern (2) mindestens eine Decklage (7) mit einer höheren Steifigkeit als der Flechtkern (2) angeordnet ist.

16. Ausschnittverstärkung nach wenigstens einem der Ansprüche 12 bis 15,
**dadurch gekennzeichnet,**
**dass** die Faserstränge (3) wenigstens teilweise aus Grilon-Fäden bestehen.

17. Ausschnittverstärkung nach wenigstens einem der Ansprüche 12 bis 16,
**dadurch gekennzeichnet,**
**dass** die Faserstränge (3) und die Faserbündel (13) durch chemische Reaktion miteinander verklebbar sind.

## Claims

1. A method of producing a section reinforcement for a sandwich structure using a round braiding method, wherein fibre strands (3) are braided around an annular braid core (2) and before or after the braiding through-holes (4) are produced in the braid core (2) and one or more fibre bundles (13) are threaded into the through-holes (4) in the braid core (2) by means of a needle (10).

2. A method according to claim 1, **characterised in that** the fibre bundle (13) is hooked at least for a time into the needle (10) during threading in.

3. A method according to claim 1 or claim 2, **characterised in that** away from a hook (11) the needle (10) is subjected substantially to tensile stress in the axial direction during threading in of the fibre bundle (13).

4. A method according to at least one of the preceding claims, **characterised in that** a braid core (2) of foam is braided around.

5. A method according to at least one of the preceding claims, **characterised in that** at least one outer layer (7), which has a higher rigidity than the braid core (2), is applied to the braid core (2) before braiding.

6. A method according to at least one of the preceding claims, **characterised in that** the braid core (2) is braided around a plurality of times in succession.

7. A method according to at least one of the preceding claims, **characterised in that** the through-hole (4) is also produced with the needle (10).

8. A method according to at least one of the preceding claims, **characterised in that** shortly before or during braiding an adhesive (15) is applied to the braid core (2) or the fibre strand (3), which adhesive remains uncured during braiding.

9. A method according to at least one of the preceding claims, **characterised in that** the through-holes (4) and/or the braid core (2) is/are infiltrated with a curable plastics (17) after the fibre bundle (13) has been threaded into the through-holes (4).

10. A method according to at least one of the preceding claims, **characterised in that** the fibre strands (3) and the fibre bundle (13) are joined together, **in that** they react together chemically.

11. A method according to at least one of the preceding claims, **characterised in that** the inner region (20) of the braid core (2) is covered prior to infiltration.

12. A section reinforcement for a sandwich structure (1), which comprises an annular braid core (2), braiding (5) around the braid core (2) and at least one through-hole (4) through the annular braid core (2) and at least one fibre bundle (13) arranged in the through-hole (4), wherein the through-hole (4) comprises a cross-sectional area which is substantially completely filled by the at least one fibre bundle (13) and wherein the braiding (5) also extends in an inner region (20) of the annular braid core (2).

13. A section reinforcement according to claim 12, **characterised in that** the at least one fibre bundle (13) comprises at least one loop (14).

14. A section reinforcement according to claim 12 or claim 13, **characterised in that** the fibre strands (3) comprise carbon, glass, aramid and/or Kevlar fibres.

15. A section reinforcement according to at least one of claims 12 to 14, **characterised in that** at least one outer layer (7) with a higher rigidity than the braid core (2) is arranged on the braid core (2).

16. A section reinforcement according to at least one of claims 12 to 15, **characterised in that** the fibre strands (3) consist at least partially of Grilon yarns.

17. A section reinforcement according to at least one of claims 12 to 16, **characterised in that** the fibre strands (3) and the fibre bundle (13) may be adhesively bonded together by chemical reaction.

## Revendications

1. Procédé de fabrication d'un renforcement de découpes pour une structure à âme au moyen d'une technique de tressage rond, dans lequel une âme à tresser annulaire (2) est tressée à l'aide de fils de fibres (3) et des trous de passage (4) sont réalisés dans l'âme à tresser (2) avant ou après le tressage, et un ou plusieurs faisceaux de fibres (13) sont insérés dans les trous de passage (4) de l'âme à tresser (2) à l' aide d'une aiguille (10).

2. Procédé selon la revendication 1, **caractérisé en ce que** le faisceau de fibres (13) est accroché dans l'aiguille (10) au moins temporairement lors de l'insertion.

3. Procédé selon la revendication 1 ou 2, **caractérisé en ce que**, lors de l'insertion du faisceau de fibres (13), l'aiguille (10) est sensiblement sollicitée en traction dans le sens axial à l'extérieur du crochet (11).

4. Procédé selon au moins une des revendications précédentes, **caractérisé en ce qu'**une âme à tresser (2) en mousse synthétique est tressée.

5. Procédé selon au moins une des revendications précédentes, **caractérisé en ce qu'**avant le tressage, au moins une couche de recouvrement (7), qui présente une rigidité supérieure à l'âme à tresser (2), est appliquée sur l'âme à tresser (2).

6. Procédé selon au moins une des revendications précédentes, **caractérisé en ce que** l'âme à tresser (2) est tressée plusieurs fois successivement.

7. Procédé selon au moins une des revendications précédentes, **caractérisé en ce que** le trou de passage (4) est également produit avec l'aiguille (10).

8. Procédé selon au moins une des revendications précédentes, **caractérisé en ce que**, juste avant ou pendant le tressage, l'âme à tresser (2) ou le fil de fibres (3) reçoit une colle (15) qui n'est pas encore durcie pendant le tressage.

9. Procédé selon au moins une des revendications précédentes, **caractérisé en ce qu'** après l'insertion des faisceaux de fibres (13) dans les trous de passage (4), une infiltration de plastique durcissable (17) dans les trous de passage (4) et/ou l'âme à tresser (2) est réalisée.

10. Procédé selon au moins une des revendications précédentes, **caractérisé en ce que** les fils de fibres (3) et les faisceaux de fibres (13) sont liés les uns aux autres en réagissant chimiquement ensemble.

11. Procédé selon au moins une des revendications précédentes, **caractérisé en ce que** la zone intérieure (20) de l'âme à tresser (2) est masquée avant l'infiltration.

12. Renforcement de découpes pour une structure à âme (1), qui présente une âme à tresser annulaire (2), un tressage (5) de l'âme à tresser (2) ainsi qu'au moins un trou de passage (4) à travers l'âme à tresser annulaire (2) et au moins un faisceau de fibres (13) disposé dans le trou de passage (4), le trou de passage (4) présentant une surface de section qui est sensiblement entièrement remplie par le au moins un faisceau de fibres (13), et le tressage (5) s'étendant également dans une zone intérieure (20) de l'âme à tresser annulaire (2).

13. Renforcement de découpes selon la revendication 12, **caractérisé en ce que** le au moins un faisceau de fibres (13) présente au moins une boucle (14).

14. Renforcement de découpes selon la revendication 12 ou 13, **caractérisé en ce que** les fils de fibres (3) présentent des fibres de carbone, de verre, d'aramide et/ou Kevlar.

15. Renforcement de découpes selon au moins une des revendications 12 à 14, **caractérisé en ce que** l'âme à tresser (2) reçoit au moins une couche de recouvrement (7) présentant une rigidité supérieure à l'âme à tresser (2).

16. Renforcement de découpes selon au moins une des revendications 12 à 15, **caractérisé en ce que** les fils de fibres (3) sont constitués au moins partiellement de fils Grilon.

17. Renforcement de découpes selon au moins une des revendications 12 à 16, **caractérisé en ce que** les fils de fibres (3) et les faisceaux de fibres (13) peuvent être collés les uns aux autres par une réaction chimique.
